# EUROPEAN PATENT APPLICATION

(11) **EP 4 660 787 A1**
(43) Date of publication of application: **10.12.2025**
(21) Application number: 25180552.9
(22) Date of filing: 03.06.2025
(51) Int. Cl.: G06F 8/41, G06F 3/04815, G06F 3/0484

(54) **PORTAL SIZE API**

(30) Priority: 09.06.2024 US 202463657903 P; 27.02.2025 US 202519065651
(71) Applicant: Apple Inc., Cupertino, CA 95014 (US)
(72) Inventor: HAJAS, Peter L., Cupertino, 95014 (US); MA, Mark L., Cupertino, 95014 (US); REITER, Michael A., Cupertino, 95014 (US); BUERLI, Michael E., Cupertino, 95014 (US); ROSSI, Peter A., Cupertino, 95014 (US); HANNEMANN, Raffael, Cupertino, 95014 (US)
(74) Representative: Bateman, Samuel Alec

(57) **Abstract**

Methods, systems, and apparatus, including computer programs encoded on computer storage media, for performing operations in response to a portal size change. One of the methods includes obtaining, from an application, first information defining a request to create an application portal for the application and that includes data identifying one or more portal size parameters; and in response to obtaining the first information defining the request to create the application portal and that includes the data identifying the one or more portal size parameters, providing, to an operating system, the first information that includes the data identifying the one or more portal size parameters for use controlling the size of the application portal.

## Description

### CROSS-REFERENCE TO RELATED APPLICATION

This application claims the benefit of U.S. Patent Application No. 19/065,651, filed on February 27, 2025, which claims priority to U.S. Provisional Application No. 63/657,903, filed on June 9, 2024, the entire contents of both of which are incorporated by reference herein.

### BACKGROUND

Extended reality ("XR") devices can include virtual reality ("VR") and augmented reality ("AR") devices. An XR device can display content from applications executing on the XR device.

### SUMMARY

In general, one aspect of the subject matter described in this specification can be embodied in methods that include the actions of obtaining, from an application, first information defining a request to create an application portal for the application and that includes data identifying one or more portal size parameters; and in response to obtaining the first information defining the request to create the application portal and that includes the data identifying the one or more portal size parameters, providing, to an operating system, the first information that includes the data identifying the one or more portal size parameters for use controlling the size of the application portal.

In general, one aspect of the subject matter described in this specification can be embodied in methods that include the actions of obtaining, from an application, first information defining a request for a current portal size parameter for an application portal for the application that is currently rendered by a device; in response to obtaining the first information, accessing a shared memory that maintains the current portal size parameter and to which the application and an operating system for the device have access; and in response to accessing the shared memory, providing, to the application, second information defining the current portal size parameter for use changing a presentation parameter of the application other than a size of the portal.

In general, one aspect of the subject matter described in this specification can be embodied in methods that include the actions of receiving input to create a portal for an application; providing, via an application programming interface, one or more size parameters for the application executing on an extended reality device; and rendering the portal, wherein a system process of the extended reality device constrains size of the portal using the one or more size parameters.

In general, one aspect of the subject matter described in this specification can be embodied in methods that include the actions of requesting, via an application programming interface, a current size of an application that is stored in a shared memory to which an operating system of an extended reality device and the application, executing on the extended reality device, have access; receiving, via the application programming interface, the current size of the portal that was retrieved by the application programming interface from the shared memory; and changing a presentation parameter of the application other than a size of the portal using the current size of the portal.

In general, one aspect of the subject matter described in this specification can be embodied in methods that include the actions of maintaining, in memory of an extended reality device, one or more portal size parameters that are defined by an application using an application programming interface and each indicate a limitation on a size of an application portal of the application when the application portal is presented by the extended reality device. The method includes rendering, by the extended reality device, the application portal with a current portal size; detecting, by the extended reality device, a request to change the current portal size of the application portal to a requested portal size. Further, the method includes determining whether the requested portal size satisfies each of the one or more portal size parameters; and selectively updating the size of the portal or determining to skip updating the size of the portal using a result of the determination whether the requested portal size satisfies each of the one or more portal size parameters.

In general, one aspect of the subject matter described in this specification can be embodied in methods that include the actions of providing, by an extended reality device to an application and using an application programming interface, access to a current portal size parameter for an application portal for the application that is currently rendered by the extended reality device; receiving, from the application and using the application programming interface, a request to change a presentation parameter for the application portal that is based on the current portal size parameter for the application portal; and in response to receiving the request to change the presentation parameter for the application portal that is based on the current portal size parameter for the application portal, causing presentation of the application portal with the changed presentation parameter.

Other implementations of this aspect include corresponding computer systems, apparatus, computer program products, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The foregoing and other implementations can each optionally include one or more of the following features, alone or in combination.

In some implementations, the method can include, receiving, from the application and using the application programming interface, a request to create the application portal that includes data identifying the one or more portal size parameters; and in response to receiving the request to create the application portal that includes the data identifying the one or more portal size parameters, storing, in memory, the one or more portal size parameters.

In some implementations, the one or more portal size parameters include an initial portal size, the method including: in response to receiving the request to create the application portal that includes the initial portal size, rendering, by the extended reality device, the application portal at the initial portal size that was included in the request to create the application portal.

In some implementations, the method can include, determining, for a portal size parameter type, whether the request to create the application portal includes a corresponding portal size parameter and to skip using a default portal size parameter for the portal size parameter type; and in response to determining that the request to create the application portal includes the corresponding portal size parameter, storing, in memory, the corresponding portal size parameter and determining to skip using the default portal size parameter for the portal size parameter type.

In some implementations, the method can include, receiving, from a second application, a second request to create a second application portal; determining, for a portal size parameter type, whether the second request to create the second application portal includes a corresponding portal size parameter and to skip using a default portal size parameter for the portal size parameter type; in response to determining that the request to create the application portal does not include the corresponding portal size parameter, controlling a second size of the second application portal using the default portal size parameter for the portal size parameter type.

In some implementations, the method can include, receiving, from a second application, a second request to create a second application portal that includes a portal size parameter that has a portal size parameter type; determining, for the portal size parameter type, whether the extended reality device has a user defined portal size parameter and to skip use of the portal size parameter from the second request for presentation of the second application portal; and selectively using the user defied portal size parameter or the portal size parameter form the second request for presentation of the second application portal using a result of the determination whether the extended reality device has a user defined portal size parameter and to skip use of the portal size parameter from the second request for presentation of the second application portal.

In some implementations, the method can include, maintaining the one or more portal size parameters includes maintaining a plurality of portal size parameters that includes, for each of two or more different application experiences, at least one corresponding portal size parameter, the method including: detecting, using the application programming interface, an experience change in the application; and selecting, from the plurality of portal size parameters and using data for the experience change, one or more corresponding portal size parameters for the experience change.

In some implementations, the one or more portal size parameters include at least one of a minimum portal size, a maximum portal size, or an initial portal size.

In some implementations, the method can include, detecting a change from a previous portal size to a new portal size; and updating the current portal size parameter in response to detecting the change from the previous portal size to the new portal size, wherein receiving the request to change the presentation parameter for the application portal is based on updating the current portal size from the previous portal size to the new portal size.

In some implementations, updating the current portal size parameter includes updating, in a shared memory accessible by the application and an operating system of the extended reality device, the current portal size parameter.

In some implementations, the request to change the presentation parameter for the application portal includes at least one of a request to change audio for the application portal, a request to change a display of one or more user interface elements included in the application portal, a request to change a color for an interface element included in the application portal, a request to a change in brightness for an interface element included in the application portal, or a request to change a rendering task for the application portal.

In some implementations, providing, to the application and using the application programming interface, access to the current portal size parameter includes maintaining, in a shared memory accessible by the application and an operating system of the extended reality device, the current portal size parameter.

In some implementations, receiving the request to change the presentation parameter for the application portal includes receiving, from the application using the application programming interface, a message that includes the request to change the presentation parameter for the application portal.

The subject matter described in this specification can be implemented in various implementations and may result in one or more of the following advantages.

Implementations of the disclosed API can offer enhanced experiences to users, particularly when an application executing on an XR device does not provide content outside of a portal, such as 360 degrees behind the display, or above or below a certain pitch, e.g., rotation around a side-to-side axis extending through a display. Thus, computational resources can be reduced by limiting the portal size. For example, if the application is a bowling game where the focus is in front of the user, using the API to limit portal size reduces computational resources when content does not have to be created behind the user. The computational resources can be computational cycles, memory, battery, or a combination of these.

In some implementations, e.g., depending on an application, when an API limits a portal size, e.g., using parameters from the application, a system executing the API can have improved computational resource usage, e.g., reducing an amount of content generated by the application. This can occur when content is not created outside of a particular range of motion, such as behind a user. An operating system can use the parameters, received via the API, to set bounds on a portal size even when user input attempts to increase or decrease the portal size outside of the bounds. In some implementations, narrower portals, portals of a smaller size, or a combination of both, can mitigate motion discomfort, e.g., motion sickness, of a user. In some implementations, the size of the portal may correspond to an accessibility setting indicated by user input when the application is running on the system. Accordingly, the API 104 can update default setting(s) of the system to address motion discomfort or user accessibility.

In some implementations, use of a shared memory for one or more portal size parameters can reduce a latency of an application responding to an update in the portal size compared to other systems, e.g., that pass messages between an operating system and the application.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a schematic view of a system.
FIG. 2 illustrates an environment viewable through display of the system.
FIG. 3 is a flow diagram of an example process for determining one or more portal size parameters.
FIG. 4 is a flow diagram of an example process for providing access to a current portal size parameter for an application portal.
FIGS. 5A-B are examples of devices and systems for an application programming interface.
FIGS. 6A-D are example processes for an application programming interface.
FIG. 7 is a flow diagram of a computing system that can be used in connection with computer-implemented methods described in this specification.

Like reference numbers and designations in the various drawings indicate like elements.

### DETAILED DESCRIPTION

An extended reality ("XR") device can display content from one or more applications using an application window, e.g., a portal. The application window can have a size in the XR device display. Different types of content can be presented differently by different applications. For instance, one application might require a different size for an immersive experience by the application than another application.

To enable the application to define one or more size parameters, the XR device can use an application programming interface ("API"). The API can enable the application to provide one or more size parameters when the application is launched, an application window is presented, or a combination of both. For instance, the application can have one or more developer defined size parameters that indicate an initial size, a minimum size, or a maximum size.

As the size of the application window changes, an experience provided by the application can change. For instance, the XR device can provide an application access to a current size of the application window, e.g., using a shared memory. The application can use the current size to determine changes to the presentation of the application. The changes can include changes to an "immersion" of the application, e.g., an amount of XR immersion. For instance, the changes can include changes to sound effects, e.g., ambient sound effects; rendering tasks; user interface ("UI") elements; or a combination of two or more of these.

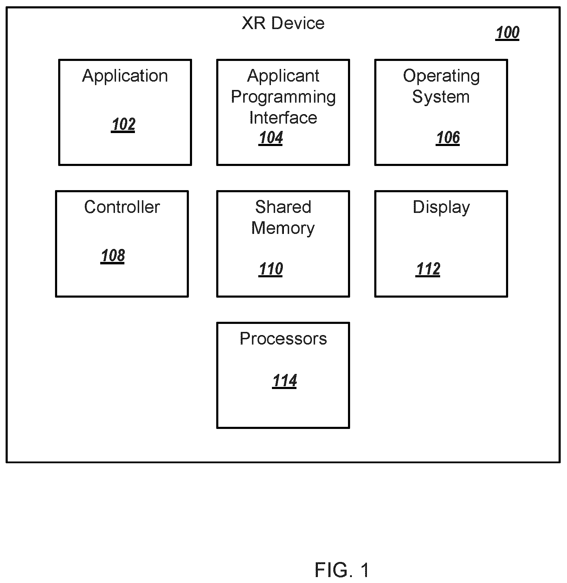

FIG. 1 is a schematic view of a system 100. The system 100, in some implementations, is an extended reality ("XR") device that is configured to display a virtual reality environment or an augmented reality environment to a user of the system 100. The system 100 includes an application 102, an application programming interface ("API") 104, an operation system 106, a controller 108, a shared memory 110, a display 112, and one or more processors 114 (generally referred to as a processor though various operations might be performed by different ones of multiple processors).

In some implementations, the application 102 is a single software application that is stored and executed locally on the system 100. The application 102 sends and receives instructions in the form of data to and from the operating system 106. In some examples, the application 102 can communicate with one or more of the controller 108, the shared memory 110, the display 112, and the processor 114. The processor 114 receives instructions from the application 102 and provides an output to one or more of operating system 106, the controller 108, the display 112, and the processor 114. In some instances, the application 102 can use the processor 114 to access data stored in the shared memory location 110.

In general, the operating system 106 manages hardware resources and mediates between applications that accomplish tasks for the system 100. The operating system 106 manages resources, e.g., data or power, between the application 102, API 104, shared memory 110, display 112, and processor 114.

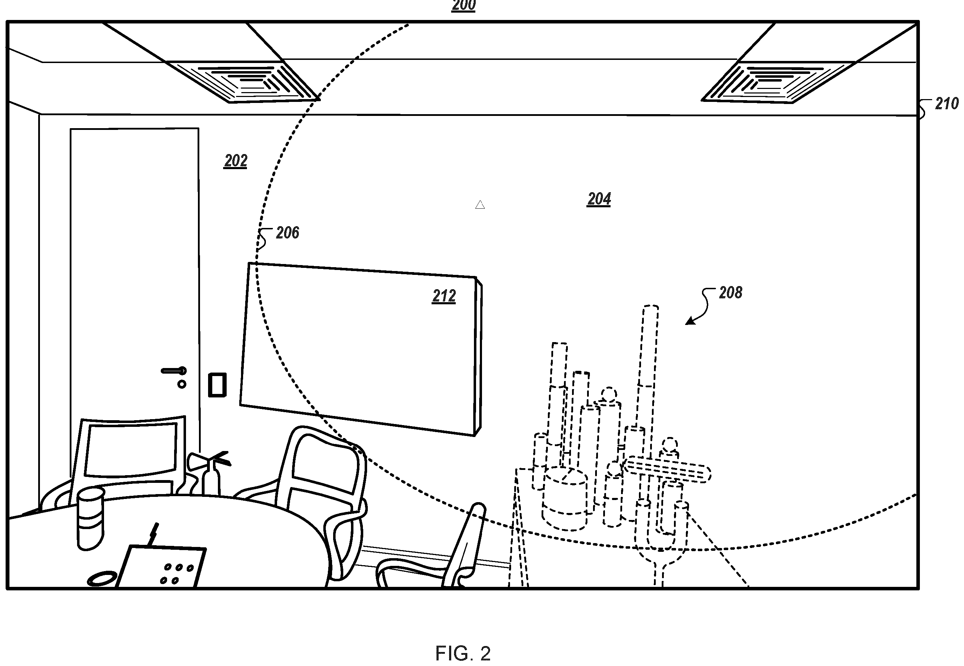

The application programming interface ("API") 104 can be used to control how the application 102 utilizes, at least in part, the operating system 106 and other system 100 resources, such as the shared memory location 110. The API 104 enables a developer, such as a developer of the application 102, to control, at least in part, how the application 102 interacts with the controller 108, shared memory 110, and display 112. For instance, the application 102 can use the API 104 to determine how a portal 204 is represented in a field of view 210 of display 112, shown in FIG. 2. Implementing the API 104 in the system 100 enables an application 102 to have a maximum and minimum (Min/Max) size of the portal 204 (e.g., size of an application portal), as described below in FIG. 2.

The controller 108 can be used to adjust a size of the portal 204 that presents content for the application 102. The size of the portal, e.g., a current size parameter, can be represented by any appropriate value, such as an immersion value (valᵢₘ) of the application. The immersion value can represent an amount of XR immersion. The system 100 can store the immersion value (valᵢₘ) in the shared memory 110. In some examples, the immersion value (valᵢₘ) can have a default setting. In some implementations, the system 100 is an extended reality device, such as the Apple Vision Pro^{®}, and the controller 108 is a Digital Crown.

When the application 102, with the portal 204, is in focus for the system 100, the controller 108 can receive input. The input can indicate an adjustment to a size of the portal. The input can be rotation of the controller, e.g., when the controller is a knob, a button press, e.g., when the controller includes an increase button and a decrease button, or other appropriate input.

As the controller 108 receives input adjusting the size of the portal, the operating system 106 uses data representing the input to adjust a size of the portal as presented on the display 112. The operating system 106 can store a value representing the size of the portal in the shared memory 110. For instance, the operating system 106 can store the immersion value (valᵢₘ) or another appropriate value in the shared memory 110. The value stored in the shared memory 110 is generally referred to as a portal size parameter. In some examples, the shared memory 110 can maintain multiple portal size parameters for the portal. In these examples, the operating system 106 has read and write access to the shared memory 110.

The use of the shared memory 110 can enable the operating system 106 and the application 102 to access the immersion value. For instance, the application 102 can have read only access to the shared memory 110. This can reduce a latency to updates made to the application 102 as a result of changes in the portal size, e.g., while increasing system 100 security by not allowing the application 102 to modify the one or more portal size parameters maintained in the shared memory 110.

FIG. 2 illustrates an environment 200 viewable through display 112 of the system 100. Utilizing the system 100 as part of an augmented reality ("AR") device, the display depicts a real-world view 202 and a portal 204 through which ("UI") elements and other content 208 (e.g., virtual content) are shown. The portal 204 has a boundary 206 between the real-world view 202 and the virtual view 204. An augmented reality of the environment 200 is viewable when the portal 204 encompasses a portion of the field of view 210 of the display 112 that is less than an entirety of the field of view 210, when some of the content is at least partially transparent, or both, as shown in FIG. 2. For example, a perimeter of the boundary 206 encompasses a first portion of the field of view, and the real-world view 202 is viewable through a second portion of the field of view 210. In this example, a real-world television 212 is shown on a wall both inside and outside the boundary 206. The system 100 can present virtual reality content when the portal 204 encompasses an entirety of the field of view 210, e.g., and is not transparent. When the application 102 is executed, a portion or an entirety of the application 102 is viewable within the portal 204.

Creation of the portal 204 for the application 102 can occur at any appropriate time. For instance, initial execution of the application 102 can trigger creation of the portal 204. In some instances, system 100 can create the portal 204 after the initial execution of the application 102, e.g., in response to another trigger.

When creating the portal, the operating system 106 can receive data that identifies the size parameters for the portal 204. The size parameters can include, for the portal 204, a minimum size, a maximum size, an initial size, or a combination of two or more of these. The operating system 106, or another component of the system 100, can use the size parameters to determine an immersion value for the portal 204. For instance, when the operating system 106 receives data that identifies an initial size for the portal 204, the operating system 106 can determine the immersion value for the portal 204, create the portal 204 using the immersion value, and store the immersion value in the shared memory 110.

The size parameters for the size of the portal 204 can represent any appropriate property of the portal related to the size of the portal 204. For instance, the size can be a size of the boundary 206 for the portal 204, an area of the portal 204, or a combination of both. The operating system 106 can use the immersion value, the size parameters, or a combination of both, to set a size of the boundary 206 for the portal 204. In some implementations, the operating system 106 maintains a minimum value (minᵥ) and a maximum value (maxᵥ) of the boundary 206. In some implementations, the operating system 106 maintains a minᵥ and maxᵥ of an area of the portal 204. In some implementations, the operating system 106 maintains a minᵥ and maxᵥ for the boundary 206 and a minᵥ and maxᵥ of an area of the portal 204. The size parameters can be any appropriate values, e.g., defined by the application, the operating system, or some combination of both. The latter can occur when an operating system defines values that are not already defined by the application.

The properties for the size of the portal, e.g., the immersion value, the minimum size minᵥ, the maximum size maxᵥ, or a combination of these, can be any appropriate data type. For instance, one or more of these values can be floating point numbers between 0 and 1, inclusive. One or more of the properties can represent a percentage of the field of view 210 of the display 116. For example, a minᵥ of 0 indicates 0% of the field of view 210, and a minᵥ or maxᵥ of 1 indicates 100% of the field of view 210.

The size parameters can indicate initial settings (e.g., dimensions and coordinates) for the minᵥ and the maxᵥ of the portal 204. In some implementations, the size parameters can indicate a null value or can be empty, such that the minᵥ and the maxᵥ are set to a default value (val_{def}) of the system 100. This can occur when the operating system 106 does not receive one or more of the size parameters from the application 102, e.g., during creation of the portal 204. The operating system 106 can maintain the default values in memory, e.g., in a memory that is not accessible to the application 102 or otherwise using the API 104. For instance, the operating system 106 maintains the default values in a memory that is a different memory than the shared memory 110. Upon initial launching of the application 102, the operating system 106 can set a size of the portal 204 to an initial value (valᵢₙₜ) if defined, the null value (valₙᵤₗ), or the minᵥ and maxᵥ. The default value (val_{def}) and the initial value (valᵢₙₜ) can be floating point numbers. Any combination of one or more of minᵥ, maxᵥ, valᵢₙₜ, val_{def}, valₙᵤₗ may be referred to individually as a portal size parameter or in various combinations as portal size parameters.

The portal 204 is shown in FIG. 2 having an oval shape. However, the portal 204 is not limited to this representation and can be configured as other shapes including rectangular, triangular, canonical, circular, cylindrical, and other parallelograms and polygons. The field of view 210 is displayed in landscape view. The field of view 210 can be implemented in portrait view.

In some implementations, the system 100 can use multiple different minᵥ and maxᵥ for the portal 204. For instance, when creating the portal 204, the operating system 106 can receive a first set of one or more size parameters for the portal 204 from the application 102. When the application 102 detects an occurrence of a trigger, the application 102 can provide a second set of one or more size parameters for the portal to the operating system 106. For example, the trigger can be a time, a duration of time, e.g., for which the portal 204 was presented, coordinates in the field of view 210, user input, progress within the application 102, a status of a feature within the application 102, or a combination of two or more of these. In some implementations, when the application 102 is a video game, the minᵥ and maxᵥ can be indicated based on a time point reached in game or level, based on user progress or level within the game, or a combination of both. In some implementations, minᵥ and maxᵥ is indicated based upon a status or level of a character within the game. In some implementations, the minᵥ and maxᵥ can be indicated based upon where an object is located within the coordinates of the field of view 210. The application 102 can provide the minᵥ and maxᵥ using the API 104 and the operating system 106 based upon pausing of the video game, resuming presentation of content, a change in sound, a change in music, or a combination of two or more of these.

The application 102 can access the data stored in the shared memory 110, e.g., a current size parameter for the portal 204 such as the immersion value. As described above, the operating system 106 can set the current size parameter stored in the shared memory 110. In some implementations, the controller 108 can store the current size parameter in the shared memory 110. For example, a user input to the controller 108 indicates an adjustment to the current portal size and the controller 108, the operating system 106, or both, determine the immersion value. In some examples, the current size parameter corresponds to a percentage of field of view 210 that shows the portal 204. The current size parameter can be a floating point number between 0 and 1.

The application 102 can use the current size parameter, changes to the current size parameter, or a combination of both, to change presentation of the portal 204. For instance, upon detecting a change to the current size parameter, the application 102 can change video playback, change audio playback, change a depiction of one or more user interface elements, or a combination of two or more of these. A change to video, audio, or both, playback can include playing video, audio, or both, pausing or otherwise stopping video, audio or both, or a combination of these. For instance, when the current size parameter increases to a value that satisfies size threshold, the application 102 can determine to play video, e.g., that was paused when the size threshold was not satisfied, play audio, e.g., that was paused when the size threshold was not satisfied, or a combination of both.

A change to a user interface element can include any appropriate type of change. In some examples, a change to one or more user interface elements can include a change to a size of a user interface element, e.g., in the same direction as the size change of the portal 204. In some examples, a change to a user interface element can include a change to a location of the user interface element. For instance, as the size of the portal increases, a user interface element can be moved from a top to a size of the portal.

The shared memory 110 can be accessed by the application 102 and the operating system 106 without passing messages between the application 102 and the operating system 106 using the processors 114. For instance, the operating system 106 can store, e.g., using at least one of the processors 114, an updated current size parameter in the shared memory 110. Separately, the application 102 can access, e.g., using at least one of the processors 114, the updated current size parameter that is stored in the shared memory 110. As a result, the system 100 can have a lower latency in providing the updated current size parameter to the application 102, e.g., compared to the use of messages.

In some implementations, the system 100 can present a message when user input to the controller 108 indicates a valᵢₘ that is outside of the bounds of the minᵥ and maxᵥ, whether these bounds are set by the application 102, the operating system 106, user settings, or a combination of both. In some implementations, the system 100 overrides a valᵢₘ that is outside of the bounds of the minᵥ and maxᵥ and limits valᵢₘ to a value between minᵥ and maxᵥ.

The operating system 106 can maintain one or more boundaries for the size parameters. The boundaries can be allowed boundaries, e.g., no presentation or full presentation on the display 112. The boundaries can be boundaries for operating system 106 specific optimization of portal presentation. In some examples, the boundaries can be based on user defined values, e.g., a maximum, minimum, or both, boundary value given one or more accessibility settings.

In these implementations, the operating system 106 can determine whether the one or more application specific size parameters based on data received from the application 102 satisfy the operating system 102 maintained boundaries. If not, the operating system 106 can determine to skip storing the one or more application specific size parameters in memory and use the operating system size parameters instead.

If the operating system determines that the application specific size parameters do not overlap with the operating system size parameters, the operating system can determine to present a message about the conflict. For instance, when the operating system size parameters indicate a minimum size parameter that is greater than an application specific maximum size parameter, the operating system can present a message, e.g., an error message, in response to receipt of instructions to create the portal 204.

In some implementations, the portal 204 can be implemented as part of a narrative device for different aspects of the application 102, such as a video stream, video playback, or video game. The portal 204 can be implemented as decorative background for other content presented by the application 102. The portal 204 can provide an immersive writing or meditative experience that limits distractions and external noise. The portal 204 can be utilized to expand a static image, add or change audio based on aspects of the application 102.

The system 100 is an example of a system implemented as computer programs on one or more computers in one or more locations, in which the systems, components, and techniques described in this specification are implemented. The system 100 can include several different functional components, including the application 102, the API 104, and the operating system 106. The application 102, the API 104, the operating system 106, or a combination of these, can include one or more data processing apparatuses, can be implemented in code, or a combination of both. For instance, each of the application 102, the API 104, and the operating system 106 can include one or more data processors and instructions that cause the one or more data processors to perform the operations discussed herein.

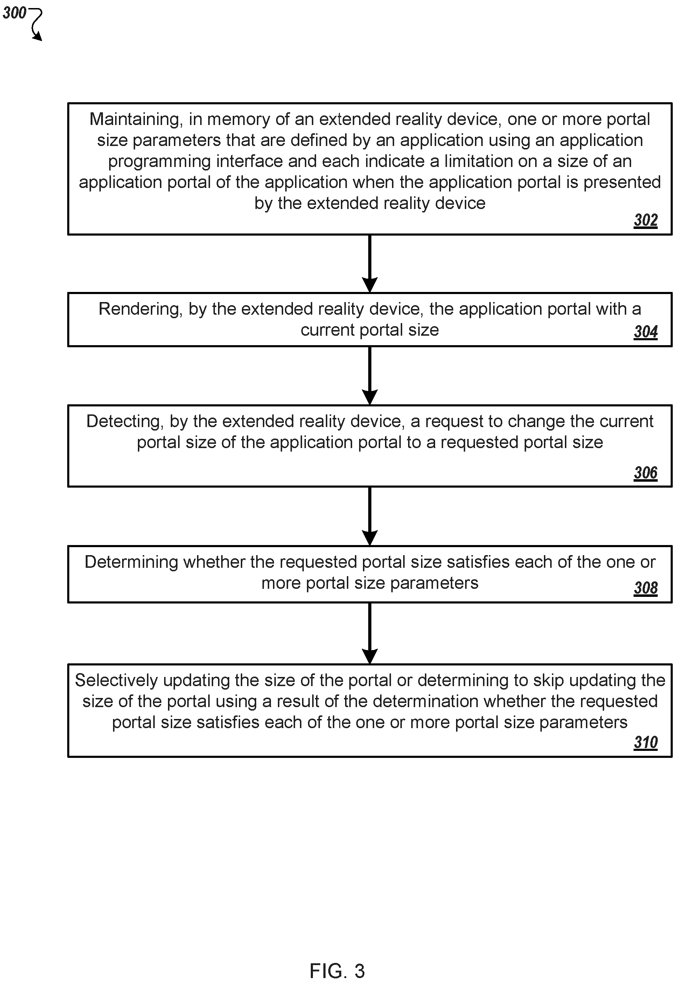

FIG. 3 is a flow diagram of an example process 300 for determining one or more portal size parameters. For example, the process 300 can be used by the system 100, e.g., the XR device.

At operation 302, the process maintains, in memory of an extended reality device, one or more portal size parameters that are defined by an application using an application programming interface and each indicate a limitation on a size of an application portal of the application when the application portal is presented by the extended reality device.

At operation 304, the process 300 renders, utilizing the extended reality device, the application portal with a current portal size.

At operation 306, the process 300 detects, by the extended reality device, a request to change the current portal size of the application portal to a requested portal size.

At operation 308, the process 300 determines whether the requested portal size satisfies each of the one or more portal size parameters.

At operation 310, the process 300 selectively updates the size of the portal or determines to skip updating the size of the portal using a result of the determination whether the requested portal size satisfies each of the one or more portal size parameters.

The process 300 can update the size of the portal in any appropriate manner. For instance, the process, e.g., the system, can update the portal using a linear curve, a smoothstep curve, or another appropriate curve. In some examples, a smoothstep curve can improve the system, e.g., user experience or comfort or both, compared to other types of curves.

In some examples, the process 300 can select a curve type to use for updating the size of the portal given a difference between the current portal size and the requested portal size. For instance, the process 300 can use a linear curve for differences that do not satisfy a threshold value, e.g., are small. The process can use a smoothstep curve for differences that satisfy the threshold value, e.g., are larger.

In some implementations, the process 300 includes receiving, from the application and using the application programming interface, a request to create the application portal that includes the one or more portal size parameters. In response to receiving the request to create the application portal that includes the one or more portal size parameters, storing, in memory, the one or more portal size parameters.

In some implementations, the one or more portal size parameters include an initial portal size. In response to receiving the request to create the application portal that includes the initial portal size, the process 300 can render, by the extended reality device, the application portal at the initial portal size that was included in the request to create the application portal.

In some implementations, the process 300 includes determining, for a portal size parameter type, whether the request to create the application portal includes a corresponding portal size parameter and to skip using a default portal size parameter for the portal size parameter type. In response to determining that the request to create the application portal includes the corresponding portal size parameter, storing, in memory, the corresponding portal size parameter and determining to skip using the default portal size parameter for the portal size parameter type.

In some implementations, the process 300 includes receiving, from a second application, a second request to create a second application portal. The process 300 includes determining, for a portal size parameter type, whether the second request to create the second application portal includes a corresponding portal size parameter and to skip using a default portal size parameter for the portal size parameter type. In response to determining that the request to create the application portal does not include the corresponding portal size parameter, controlling a second size of the second application portal using the default portal size parameter for the portal size parameter type.

In some examples, the process 300 includes receiving, from a second application, a second request to create a second application portal that includes a portal size parameter that has a portal size parameter type. The process 300 includes determining, for the portal size parameter type, whether the extended reality device has a user defined portal size parameter and to skip use of the portal size parameter from the second request for presentation of the second application portal. The process 300 includes selectively using the user defied portal size parameter or the portal size parameter form the second request for presentation of the second application portal using a result of the determination whether the extended reality device has a user defined portal size parameter and to skip use of the portal size parameter from the second request for presentation of the second application portal.

In some examples, maintaining the one or more portal size parameters involves maintaining a plurality of portal size parameters that includes, for each of two or more different application experiences, at least one corresponding portal size parameter. The process 300 includes detecting, using the application programming interface, an experience change in the application. From the plurality of portal size parameters and using data for the experience change, one or more corresponding portal size parameters are selected for the experience change.

In some examples, the one or more portal size parameters include at least one of a minimum portal size, a maximum portal size, or an initial portal size.

The order of operations in the process 300 described above is illustrative only, and the process 300 can be performed in different orders. For example, the process 300 can perform operations 302 and 304 substantially concurrently or operation 304 and then operation 302.

In some implementations, the process 300 can include additional operations, fewer operations, or some of the operations can be divided into multiple operations. For example, the process can include operations 304, 308, and 310 optionally without one or more of the other operations.

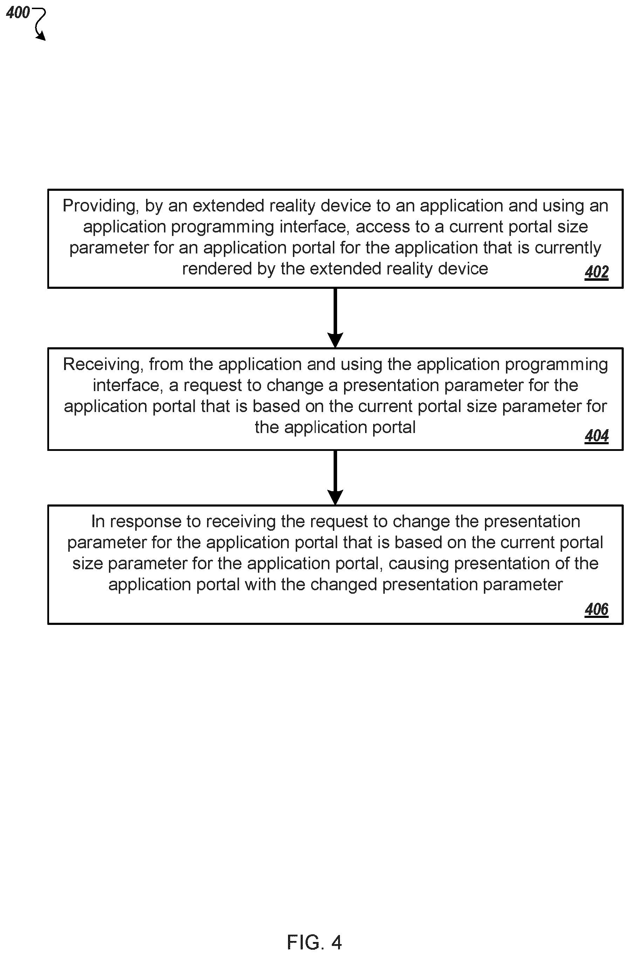

FIG. 4 is a flow diagram of an example process 400 for providing access to a current portal size parameter for an application portal. For example, the process 400 can be used by the system 100, e.g., the XR device.

At operation 402, the process 400 provides, by an extended reality device to an application and using an application programming interface, access to a current portal size parameter for an application portal for the application that is currently rendered by the extended reality device.

At operation 404, the process 400 receives, from the application and using the application programming interface, a request to change a presentation parameter for the application portal that is based on the current portal size parameter for the application portal.

At operation 406, in response to receiving the request to change the presentation parameter for the application portal that is based on the current portal size parameter for the application portal, the process 400 causes presentation of the application portal with the changed presentation parameter.

In some examples, the process 400 detects a change from a previous portal size to a new portal size. The process 400 can update the current portal size parameter in response to detecting the change from the previous portal size to the new portal size. The process 400 can include receiving the request to change the presentation parameter for the application portal is based on updating the current portal size from the previous portal size to the new portal size.

In some examples, updating the current portal size parameter includes updating, in a shared memory accessible by the application and an operating system of the extended reality device, the current portal size parameter.

In some implementations, the request to change the presentation parameter for the application portal includes at least one of a request to change audio for the application portal, a request to change a display of one or more user interface elements included in the application portal, a request to change a color for an interface element included in the application portal, a request to a change in brightness for an interface element included in the application portal, or a request to change a rendering task for the application portal.

In some examples, the process 400 provides, to the application and using the application programming interface, access to the current portal size parameter includes maintaining, in a shared memory accessible by the application and an operating system of the extended reality device, the current portal size parameter.

In some examples, the process 400 includes receiving the request to change the presentation parameter for the application portal includes receiving, from the application using the application programming interface, a message that includes the request to change the presentation parameter for the application portal.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, software modules and/or components.

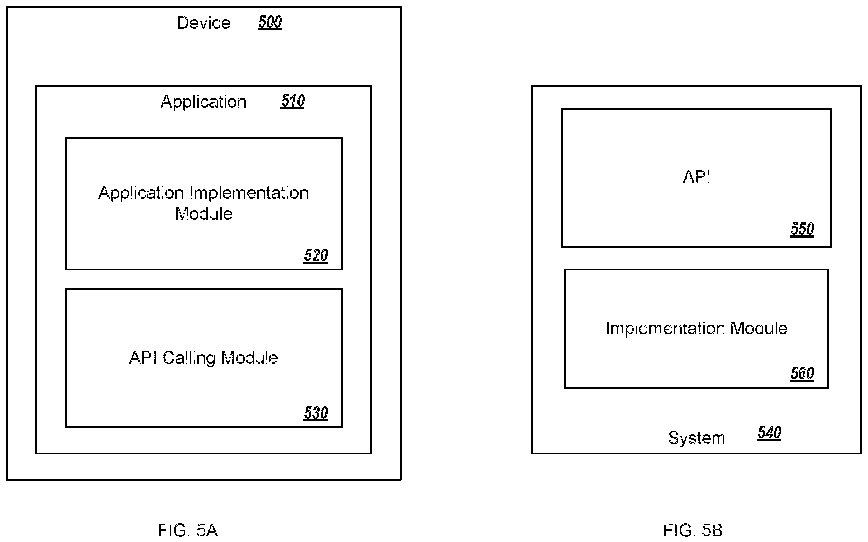

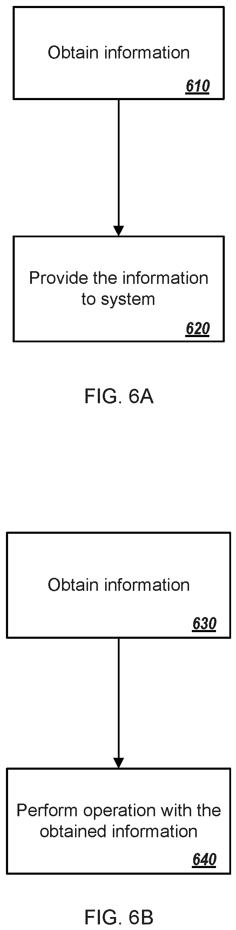

Implementations within the scope of the present disclosure include a computer-readable storage medium that encodes instructions organized as an application (e.g., application 510 shown in FIG. 5A) that, when executed by one or more processing units, control an electronic device (e.g., device 500 shown in FIG. 5A) to perform any of the methods of FIG. 6A-D, and/or one or more other processes and/or methods described herein.

It should be recognized that application 510 (shown in FIG. 5A) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 510 is an application that is pre-installed on device 500 at purchase (e.g., a first party application). In other embodiments, application 510 is an application that is provided to device 500 via an operating system update file (e.g., a first party application or a second party application). In some embodiments, application 510 is an application that is provided via an application store. In some embodiments, the application store can be an application store that is pre-installed on device 500 at purchase (e.g., a first party application store). In some embodiments, the application store is a third-party application store (e.g., an application store that is provided by another application store, downloaded via a network, and/or read from a storage device).

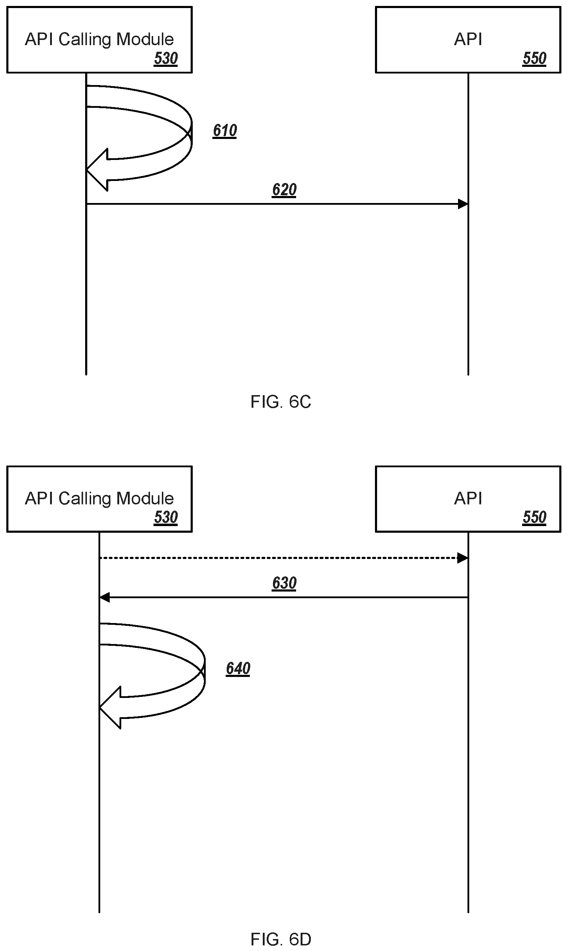

Referring to FIG. 6A and FIG 6C, application 510 obtains information (e.g., 610). In some embodiments, at 610, information is obtained from at least one hardware component of the device 500. In some embodiments, at 610, information is obtained from at least one software module (e.g., set of instructions) of the device 500. In some embodiments, at 610, information is obtained from at least one hardware component external to the device 500 (e.g., a peripheral device, an accessory device, and/or a server). In some embodiments, the information obtained at 610 includes positional information, time information, notification information, user information, environment information, electronic device state information, weather information, media information, historical information, event information, hardware information, and/or motion information. In some embodiments, in response to and/or after obtaining the information at 610, application 510 provides the information to a system (e.g., 620), e.g., using an API 550.

In some embodiments, the system (e.g., 540 shown in FIG. 5B) is an operating system hosted on the device 500. In some embodiments, the system (e.g., 540 shown in FIG. 5B) includes one or more external devices (e.g., a server, a peripheral device, an accessory, and/or a personal computing device) that includes an operating system.

Referring to FIG. 6B and FIG. 6D, application 510 obtains information (e.g., 630). The application 510 can obtain the information from the system 540, e.g., using the API 550. In some embodiments, the information obtained at 630 includes positional information, time information, notification information, user information, environment information electronic device state information, weather information, media information, historical information, event information, hardware information and/or motion information. In response to and/or after obtaining the information at 630, application 510 performs an operation with the information (e.g., 640). In some embodiments, the operation performed at 640 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 540 based on the information.

In some embodiments, one or more steps of the method of FIG. 6A and/or the method of FIG. 6B is performed in response to a trigger. In some embodiments, the trigger includes detection of an event, a notification received from system 540, a user input, and/or a response to a call to an API provided by system 540.

In some embodiments, the instructions of application 510, when executed, control device 500 to perform the method of FIG. 6A and/or the method of FIG. 6B by calling an application programming interface (API) (e.g., API 550) provided by system 540. In some embodiments, application 510 performs at least a portion of the method of FIG. 6A and/or the method of FIG. 6B without calling API 550.

In some embodiments, one or more steps of the method of FIG. 6A and/or the method of FIG. 6B includes calling an API (e.g., API 550) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 5A, device 500 is illustrated. In some embodiments, device 500 is a personal computing device, a smart phone, a smart watch, a fitness tracker, a head mounted display (HMD) device, a media device, a communal device, a speaker, a television, and/or a tablet. Device 500 includes application 510 and an operating system (not shown) (e.g., system 540 shown in FIG. 5B). Application 510 includes application implementation module 520 and API calling module 530. The API calling module 530 can implement instructions for accessing the API 550. System 540 includes API 550 and implementation module 560. The implementation module 560 can include one or more instructions that implement a corresponding software application. It should be recognized that device 500, application 510, and/or system 540 can include more, fewer, and/or different components than illustrated in FIG. 5A and 5B.

In some embodiments, application implementation module 520 is a software module that includes a set of one or more computer-readable instructions. In some embodiments, the set of one or more instructions correspond to one or more operations performed by application 510. For example, when application 510 is a messaging application, application implementation module 520 can include instructions to execute operations to receive and send messages. In some embodiments, application implementation module 520 communicates with API calling module 530 to communicate with system 540 via API 550 (shown in FIG. 5B).

In some embodiments, API calling module 530 is a software module that includes a set of one or more computer-executable instructions. The instructions can enable the API calling module 530 to communicate with the API 550, e.g., can include instructions that call one or more functions defined by the API 550.

In some embodiments, implementation module 560 is a software module that includes a set of one or more computer-executable instructions.

In some embodiments, API 550 is a software module that includes a set of one or more computer-executable instructions. In some embodiments, API 550 provides an interface that allows a different set of instructions (e.g., API calling module 530) to access and/or use one or more functions, methods, procedures, data structures, classes, and/or other services provided by implementation module 560 of system 540. For example, API-calling instructions 530 can access a feature of implementation module 560 through one or more API calls or invocations (e.g., embodied by a function or a method call) exposed by API 550 and can pass data and/or control information using one or more parameters via the API calls or invocations. In some embodiments, API 550 allows application 510 to use a service provided by a Software Development Kit (SDK) library, e.g., on the system 540. In some embodiments, application 510 incorporates a call to a function or method provided by the SDK library and provided by API 550, uses data types or objects defined in the SDK library and provided by API 550, or a combination of both. In some embodiments, API calling module 530 makes an API call via API 550 to access and use a feature of implementation module 560 that is specified by API 550. In such embodiments, implementation module 560 can return a value via API 550 to API calling module 530 in response to the API call. The value can report to application 510 the capabilities or state of a hardware component of device 500, including those related to aspects such as input capabilities and state, output capabilities and state, processing capability, power state, storage capacity and state, and/or communications capability. In some embodiments, API 550 is implemented in part by firmware, microcode, or other low-level logic that executes in part on the hardware component.

In some embodiments, API 550 allows a developer of API calling module 530 (which can be a third-party developer) to leverage a feature provided by implementation module 560. In such embodiments, there can be one or more set of API calling instructions (e.g., included in API calling module 530) that communicate with implementation module 560. In some embodiments, API 550 allows multiple sets of API calling instructions written in different programming languages to communicate with implementation module 560 (e.g., API 550 can include features for translating calls and returns between implementation module 560 and API calling module 530) while API 550 is implemented in terms of a specific programming language. In some embodiments, API calling module 530 calls APIs from different providers such as a set of APIs from an operating system ("OS") provider, another set of APIs from a plug-in provider, and/or another set of APIs from another provider (e.g., the provider of a software library) or creator of the another set of APIs.

Examples of API 550 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments the sensor API is an API for accessing data associated with a sensor of device 500. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, implementation module 560 is a system (e.g., operating system, server system) software module (e.g., a collection of computer-readable instructions) that is constructed to perform an operation in response to receiving an API call via API 550. In some embodiments, implementation module 560 is constructed to provide an API response (via API 550) as a result of processing an API call. By way of example, implementation module 560 and API-calling instructions 530 can each be any one of an operating system, a library, a device driver, an API, an application program, or other module. It should be understood that implementation module 560 and API calling module 530 can be the same or different type of software module from each other. In some embodiments, implementation module 560 is embodied at least in part in firmware, microcode, or other hardware logic, e.g., of the system 540.

In some embodiments, implementation module 560 returns a value through API 550 in response to an API call from API calling module 530. While API 550 defines the syntax and result of an API call (e.g., how to invoke the API call and what the API call does), API 550 might not reveal how implementation module 560 accomplishes the function specified by the API call. Various API calls are transferred via the one or more application programming interfaces between API calling module 530 and implementation module 560. Transferring the API calls can include issuing, initiating, invoking, calling, receiving, returning, and/or responding to the function calls or messages. In other words, transferring can describe actions by either of API calling module 530 or implementation module 560. In some embodiments, a function call or other invocation of API 550 sends and/or receives one or more parameters through a parameter list or other structure.

In some embodiments, implementation module 560 provides more than one API, each providing a different view of or with different aspects of functionality implemented by implementation module 560. For example, one API of implementation module 560 can provide a first set of functions and can be exposed to third party developers, and another API of implementation module 560 can be hidden (e.g., not exposed) and provide a subset of the first set of functions and also provide another set of functions, such as testing or debugging functions which are not in the first set of functions. In some embodiments, implementation module 560 calls one or more other components via an underlying API and thus be both a set of API calling module instructions and a set of implementation module instructions. It should be recognized that implementation module 560 can include additional functions, methods, classes, data structures, and/or other features that are not specified through API 550 and are not available to API calling module 530. It should also be recognized that API calling module 530 can be on the same system as implementation module 560 or can be located remotely and access implementation module 560 using API 550 over a network. In some embodiments, implementation module 560, API 550, and/or API calling module 530 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

In some embodiments, process 300 (FIG. 3), process 400 (FIG. 4), or both, is performed at a first computer system (as described herein) via a system process (e.g., an operating system process, a server system process) that is different from one or more applications executing and/or installed on the first computer system.

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first party application). In some embodiments, the application is an application that is provided to the first computer system via an operating system update file (e.g., a first party application). In some embodiments, the application is an application that is provided via an application store. In some embodiments, the application store is pre-installed on the first computer system at purchase (e.g., a first party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device).

In some embodiments, at least one API is a software module (e.g., a collection of computer-readable instructions) that provides an interface that allows a different set of instructions (e.g., API calling module) to access and use one or more functions, methods, procedures, data structures, classes, and/or other services provided by a set of implementation instructions of the system process. The API can define one or more parameters that are passed between the API calling module and the implementation instructions.

Some examples of APIs are described in the attached appendix.

For example, the API can provide one or more public variables. One or more of these public variables can be maintained in a shared memory, e.g., the shared memory 110 of FIG. 1. The public variables can include a minimum immersion amount, a maximum immersion amount, an initial immersion amount, or any combination of these. These amounts can have any appropriate type, e.g., can be doubles. These values can represent, for the application, a minimum size, a maximum size, and an initial size. One or more of the following function calls can enable another application to access, modify, or both, one or more of these immersion amounts. In some examples, one or more of these amounts can be public variables to which another application can have direct access using the API, e.g., by providing a name of an immersion object and a value that indicates the corresponding amount to retrieve.

The API can provide the function call init (immersion: PartialRangeFrom<Double>, initialAmount: Double? = nil) that takes two variables, immersion and initialAmount, as input. The format of immersion can be a double-precision floating-point number ("Double") or range of Doubles, e.g., a maximum and minimum value. InitialAmount can receive either a Double or 'nil', e.g., no value. Although described as a partial range from, e.g., that might include only an upper or only a lower bound, the immersion value can be any appropriate type of range, such as a closed range, a half range, a half-open range, a one-sided range, a partial range to, or a combination of these. Other ranges described in this specification can similarly be any appropriate type, e.g., one of those described here or another range type.

The variable immersion corresponds to a range of immersion used for this instance of how much of a spherical field of view of the user is covered by the portal of the effect style at most. The lower bound value of the range can represent how a spherical field of view of the user is covered by the portal effect style at most. The lower bound value can be equal to or greater '0' and less than '1.' An initialAmount indicates the initial amount of immersion used for the current instance of the style. If the value is 'nil', a system default can be used. The value of initialAmount can be within the range defined by this style.

The API 104 can include the function call static func progressive(_ immersionRange: PartialRangeFrom<Double>, initialAmount: Double? = nil). The output of this function call can be ProgressiveImmersionStyle. This function call can receive, as input, the variables immersionRange: PartialRangeFrom, and initialAmount. The API call static func progressive can be an immersion style that displays unbounded content that partially replaces passthrough video.

The variable immersionRange determines the range of immersion used for this instance of the style. The upper bound value of the range represents how much of a spherical field of view of the user is covered by the portal effect of the style at most. The upper bound value can be greater than '0' and smaller than or equal to '1'.

ProgressiveImmersionStyle determines the minimum amount of immersion used for this instance of the style. The value represents how much of a spherical field of view of the user, e.g., is covered by the portal effect of the style at least. If the value is none, e.g., 'nil', or a none set, a system default value can be used instead.

The API 204 can include the function call static func progressive(_ immersionRange: PartialRangeThrough<Double>, initialAmount: Double? = nil), e.g., which can be a ProgressiveImmersionStyle; and public init(immersion: PartialRangeThrough<Double>, initialAmount: Double? = nil), or both. As described above, these can be equivalent to the API calls above with different types of ranges for the immersionRange and immersion input values.

As described above, in some embodiments, the application controls the first computer system to perform process 300 (FIG. 3) by calling an application programming interface (API) provided by the system process using one or more parameters. In some embodiments, the application receives access to data, controls the first computer system to perform at least part of the process 400 (FIG. 4), or a combination of both, by calling an application programming interface provided by the system process using one or more parameters.

In some embodiments, the set of implementation instructions is a system software module (e.g., a collection of computer-readable instructions) that is constructed to perform an operation in response to receiving an API call via the API. In some embodiments, the set of implementation instructions is constructed to provide an API response (via the API) as a result of processing an API call. In some embodiments, the set of implementation instructions is included in the device (e.g., 500) that runs the application. In some embodiments, the set of implementation instructions is included in an electronic device that is separate from the device that runs the application.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform those operations or actions. That one or more computer programs is configured to perform particular operations or actions means that the one or more programs include instructions that, when executed by data processing apparatus, cause the apparatus to perform those operations or actions. That special-purpose logic circuitry is configured to perform particular operations or actions means that the circuitry has electronic logic that performs those operations or actions.

A number of implementations have been described. Nevertheless, it will be understood that various modifications can be made without departing from the spirit and scope of the disclosure. For example, various forms of the flows shown above can be used, with operations re-ordered, added, or removed.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, e.g., one or more modules of computer program instructions encoded on a tangible non-transitory program carrier for execution by, or to control the operation of, a data processing apparatus. Alternatively or in addition, the program instructions can be encoded on an artificially-generated propagated signal, e.g., a machine-generated electrical, optical, or electromagnetic signal, that is generated to encode information for transmission to a suitable receiver apparatus for execution by a data processing apparatus. One or more computer storage media can include a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can be or include special purpose logic circuitry, e.g., a field programmable gate array ("FPGA") or an application-specific integrated circuit ("ASIC"). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can be performed by, and apparatus can also be implemented as, special purpose logic circuitry, e.g., a field programmable gate array ("FPGA") or an application-specific integrated circuit ("ASIC").

Computers suitable for the execution of a computer program include, by way of example, general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. A computer can be embedded in another device, e.g., a mobile telephone, a smart phone, a headset, a personal digital assistant ("PDA"), a mobile audio or video player, a game console, a Global Positioning System ("GPS") receiver, or a portable storage device, e.g., a universal serial bus ("USB") flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a liquid crystal display ("LCD"), an organic light emitting diode ("OLED") or other monitor, for displaying information to the user and a keyboard and a pointing device, e.g., a mouse or a trackball or a touchscreen, by which the user can provide input to the computer. Other kinds of devices can be used to provide for interaction with a user as well. For example, feedback provided to the user can be any form of sensory feedback, e.g., visual feedback, auditory feedback, or tactile feedback; and input from the user can be received in any form, including acoustic, speech, or tactile input. In some examples, a computer can interact with a user by sending documents to and receiving documents from a device that is used by the user; for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an Hypertext Markup Language ("HTML") page, to a user device, e.g., for purposes of displaying data to and receiving user input from a user device, which acts as a client. Data generated at the user device, e.g., a result of user interaction with the user device, can be received from the user device at the server.

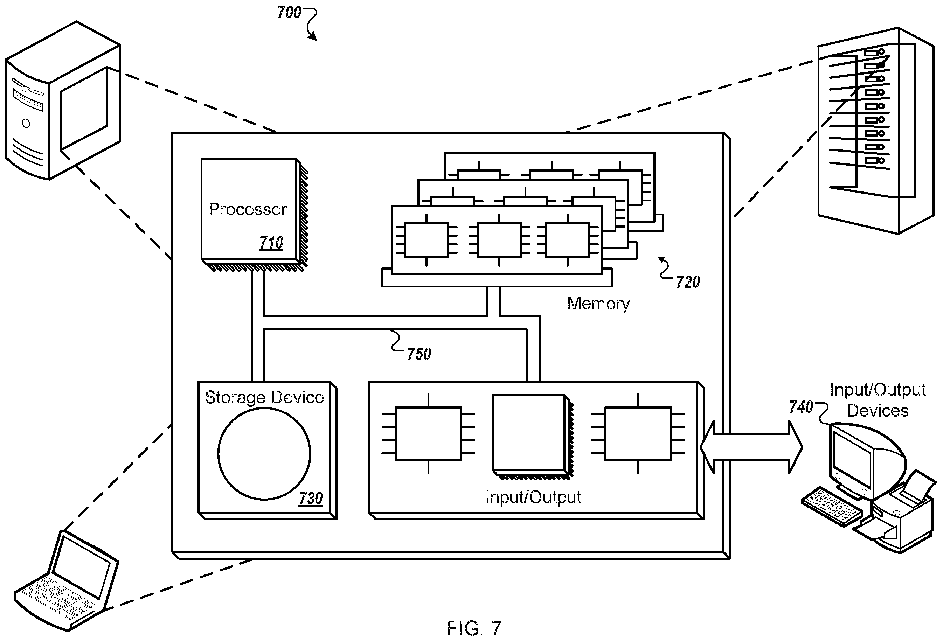

An example of one such type of computer is shown in FIG. 7, which shows a schematic diagram of a computer system 700. The computer system 700 can be used for the operations described in association with any of the computer-implemented methods described previously, according to some implementations. The computer system 700 includes a processor 710, a memory 720, a storage device 730, and an input/output device 740. Each of the components 710, 720, 730, and 740 are interconnected using a system bus 750. The processor 710 is capable of processing instructions for execution within the computer system 700. In one implementation, the processor 710 is a single-threaded processor. In another implementation, the processor 710 is a multi-threaded processor. The processor 710 is capable of processing instructions stored in the memory 720 or on the storage device 730 to display graphical information for a user interface on the input/output device 740.

The memory 720 stores information within the computer system 700. In some implementations, the memory 720 is a computer-readable medium. In some implementations, the memory 720 is a volatile memory unit. In some implementations, the memory 720 is a non-volatile memory unit.

The storage device 730 is capable of providing mass storage for the computer system 700. In some implementations, the storage device 730 is a computer-readable medium. In some implementations, the storage device 730 can be a floppy disk device, a hard disk device, an optical disk device, or a tape device.

The input/output device 740 provides input/output operations for the computer system 700. In some implementations, the input/output device 740 includes a keyboard, a pointing device, a touchscreen, or a combination of these. In some implementations, the input/output device 740 includes a display unit for displaying graphical user interfaces. In some implementations, the input/output device 740 includes a microphone, a speaker, or a combination of both.

While this specification contains many specific implementation details, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some instances be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

In each instance where an HTML file is mentioned, other file types or formats may be substituted. For instance, an HTML file may be replaced by an XML, JSON, plain text, or other types of files. Moreover, where a table or hash table is mentioned, other data structures, such as spreadsheets, relational databases, or structured files, may be used.

Particular implementations of the invention have been described. Other implementations are within the scope of the following claims. For example, the operations recited in the claims, described in the specification, or depicted in the figures can be performed in a different order and still achieve desirable results. In some implementations, multitasking and parallel processing may be advantageous.

## Claims

1. A method for rendering a portal by an extended reality device, the method comprising:
maintaining, in memory of the extended reality device, one or more portal size parameters that are defined by an application using an application programming interface and each indicates a limitation on a size of an application portal of the application when the application portal is presented by the extended reality device;
rendering, by the extended reality device, the application portal with a current portal size;
detecting, by the extended reality device, a request to change the current portal size of the application portal to a requested portal size;
determining whether the requested portal size satisfies each of the one or more portal
size parameters; and
selectively updating the size of the application portal or determining to skip updating the size of the application portal using a result of the determination whether the requested portal size satisfies each of the one or more portal size parameters.

2. The method of claim 1, comprising:
receiving, from the application and using the application programming interface, a request to create the application portal that includes data identifying the one or more portal size parameters; and
in response to receiving the request to create the application portal that includes the data identifying the one or more portal size parameters, storing, in memory, the one or more portal size parameters.

3. The method of claim 1, comprising:
receiving, from a second application, a second request to create a second application portal;
determining, for a portal size parameter type, whether the second request to create the second application portal includes a corresponding portal size parameter and to skip using a default portal size parameter for the portal size parameter type;
in response to determining that the request to create the application portion does not include the corresponding portal size parameter, controlling a second size of the second application portal using the default portal size parameter for the portal size parameter type.

4. The method of claim 1, comprising:
receiving, from a second application, a second request to create a second application portal that includes a portal size parameter that has a portal size parameter type;
determining, for the portal size parameter type, whether the extended reality device has a user defined portal size parameter and to skip use of the portal size parameter from the second request for presentation of the second application portal; and
selectively using the user defined portal size parameter or the portal size parameter from the second request for presentation of the second application portal using a result of the determination whether the extended reality device has a user defined portal size parameter and to skip use of the portal size parameter from the second request for presentation of the second application portal.

5. The method of any preceding claim, wherein:
maintaining the one or more portal size parameters comprises maintaining a plurality of portal size parameters that includes, for each of two or more different application experiences, at least one corresponding portal size parameter, the method comprising:
detecting, using the application programming interface, an experience change in the application; and
selecting, from the plurality of different portal size parameters and using data for the experience change, one or more corresponding portal size parameters for the experience change.

6. The method of any preceding claim, wherein the one or more portal size parameters comprise at least one of a minimum portal size, a maximum portal size, or an initial portal size.

7. A method for rendering a portal by an application programming interface, the method comprising:
providing, by an extended reality device to an application and using the application programming interface, access to a current portal size parameter for an application portal for the application that is currently rendered by the extended reality device;
receiving, from the application and using the application programming interface, a request to change a presentation parameter for the application portal that is based on the current portal size parameter for the application portal; and
in response to receiving the request to change the presentation parameter for the application portal that is based on the current portal size parameter for the application portal, causing presentation of the application portal with the changed presentation parameter.

8. The method of claim 7, comprising:
detecting a change from a previous portal size to a new portal size; and
updating the current portal size parameter in response to detecting the change from the previous portal size to the new portal size,
wherein receiving the request to change the presentation parameter for the application portal is based on updating the current portal size from the previous portal size to the new portal size.

9. The method of claim 8, wherein updating the current portal size parameter comprises updating, in a shared memory accessible by the application and an operating system of the extended reality device, the current portal size parameter.

10. The method of any of claims 7 to 9, wherein the request to change the presentation parameter for the application portal comprises at least one of a request to change audio for the application portal, a request to change a display of one or more user interface elements included in the application portal, a request to change a color for an interface element included in the application portal, a request to a change in brightness for an interface element included in the application portal, or a request to change a rendering task for the application portal.

11. The method of any of claims 7 to 10, wherein providing, to the application and using the application programming interface, access to the current portal size parameter comprises maintaining, in a shared memory accessible by the application and an operating system of the extended reality device, the current portal size parameter.

12. The method of claim 11, wherein receiving the request to change the presentation parameter for the application portal comprises receiving, from the application using the application programming interface, a message that includes the request to change the presentation parameter for the application portal.

13. One or more computer storage media encoded with instructions that, when executed by one or more computers, cause the one or more computers to perform the method of any preceding claim.

14. A system comprising one or more computers and one or more storage devices on which are stored instructions that are operable, when executed by the one or more computers, to cause the one or more computers to perform the method of any of claims 1 to 12.
